# EUROPEAN PATENT SPECIFICATION

(11) **EP 1 527 283 B1**
(45) Date of publication and mention of the grant of the patent: **29.11.2006**
(21) Application number: 03725962.9
(22) Date of filing: 21.05.2003
(51) Int. Cl.: F16B 33/02, B23G 1/50

(54) **A METHOD FOR DESIGN RESPECTIVE MANUFACTURE OF THREADS IN A THREADED MEMBER, A THREADED MEMBER MANUFACTURED ACCORDING TO THE METHOD, AND A BOLTED JOINT INCLUDING SUCH A MEMBER**
VERFAHREN ZUR AUSFÜHRUNGSGEMÄSSEN HERSTELLUNG VON GEWINDEN IN EINEM GEWINDEGLIED, GEMÄSS DEM VERFAHREN HERGESTELLTES GEWINDEGLIED UND SCHRAUBVERBINDUNG MIT SOLCH EINEM GLIED
PROCEDE D'USINAGE DES FILETS D'UN ELEMENT FILETE, SUR UN ELEMENT FILETE SELON LEDIT PROCEDE ET SUR UN ASSEMBLAGE VISSE COMPORTANT UN TEL ELEMENT

(30) Priority: 21.05.2002 SE 0201519
(43) Date of publication of application: 04.05.2005
(73) Proprietor: Verax Engineering AB, 16356 Spanga (SE)
(72) Inventor: WEBJÖRN, Mats, S-163 56 Spanga (SE)
(86) International application number: PCT/SE2003/000810
(87) International publication number: WO 2003/098057

(56) References cited:
- EP-A1- 1 182 366
- EP-A2- 0 404 318
- DE-A1- 3 911 042
- FR-A- 741 747
- US-A- 2 567 483
- US-A- 3 707 107
- US-A- 4 076 064
- US-A- 4 171 012
- US-A- 4 432 682
- US-A- 4 842 464
- US-A- 4 846 614
- US-A- 4 956 888
- US-A1- 2001 002 963
- PATENT ABSTRACTS OF JAPAN vol. 1995, no. 7 31 August 1995 & JP 07 110 022 A (MITSUBSIHI PENCIL CO LTD) 25 April 1995
- PATENT ABSTRACTS OF JAPAN vol. 1997, no. 6 30 June 1997 & JP 09 050 738 A (MITSUBISHI ELECTRIC CORP) 18 February 1997
- PATENT ABSTRACTS OF JAPAN vol. 1999, no. 9 30 July 1997 & JP 11 117 929 A (SUZUKI NEJI SEIKSAKUSHO:KK) 27 April 1999

## Description

The present invention relates to a method in the formation of threads of a thread-provided element intended to be included as one of two thread-provided parts in a bolted joint, which bolted joint comprises a part having an internal thread and a part having an external thread, and wherein the part having an external thread is intended to be prestressed with an axial tensile force, and where the threads of the respective parts initially are formed according to the ISO and/or Unified basic profile having an initial play in both the radial and axial direction, when said parts are screwed together and unstressed. The invention also relates to a thread-provided element formed according to the method as well as a bolted joint where at least one of the thread-provided parts of the joint consists of such a thread-provided element.

The invention furthermore relates to a method for the manufacture of threads of a thread-provided element intended to be included as one of two thread-provided parts of a bolted joint, a thread-provided element manufactured according to the method as well as a bolted joint where at least one of the thread-provided parts of the joint consists of such a thread-provided element.

Thus, the thread-provided element in question according to the invention may be either a screw or a nut, and said screws or nuts provided with threads formed according to the invention may either be used together with each other or together with screws and nuts formed according to standard.

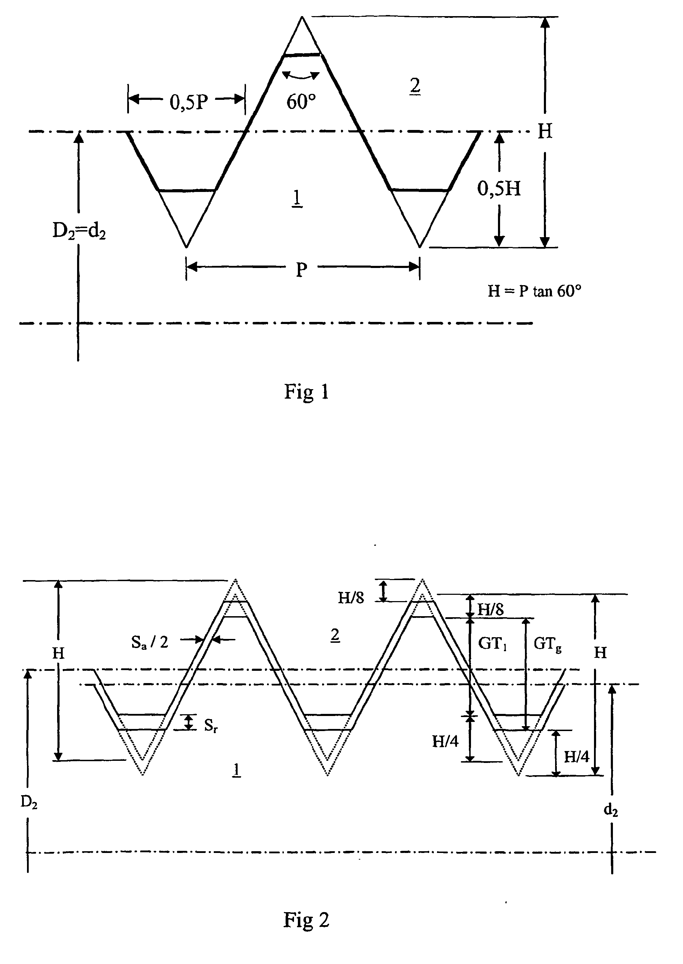

According to the ISO standard (ISO/68) for metric threads, as well as for threads according to the American Unified standard (ANSI/ASME B1.1 which refers to ISO/68), a so-called basic profile is used which is illustrated in Fig. 1. According to this basic profile, the width, among other things, is defined by the thread ridge of the screw and the thread grooves of the nut, respectively, as half the pitch (0,5P), and the theoretical mean diameter for screw and nut, respectively, d₂ and D₂, respectively, is determined by the generatrix that intersects the basic triangle on half the height H thereof. In the following, additionally a number of concepts and expressions are used according to the definitions that are given in ISO/68.

Theoretically, the mean diameters for screw and nut, respectively, coincide with each other according to the basic profile. However, in practice, there has to be a play between screw and nut in order to be assemblable.

By using standardized manufacturing tolerances, a play is obtained which gives replaceability between screw and nut from different manufacturers. The play is provided by displacing the mean diameter of the screw inwards, or the mean diameter of the nut outwards. Thereby, both a radial and an axial play is obtained, see Fig. 2. However, thereby also the thread coverage, i.e. the distance which the threads of the screw and of the nut overlap each other in radial direction, decreases correspondingly, which makes the surface pressure between the threads increasing, and the strength deteriorating.

According to Hooke's law, a body is extended proportional to the force that is applied on it. Such an extension may also be brought about by heating. To a screw, an extension means that the thread pitch increases. If the extension of the screw within the height of the nut becomes greater than the axial play between the flanks of the threads, interference will arise, which involves that the nut get locked.

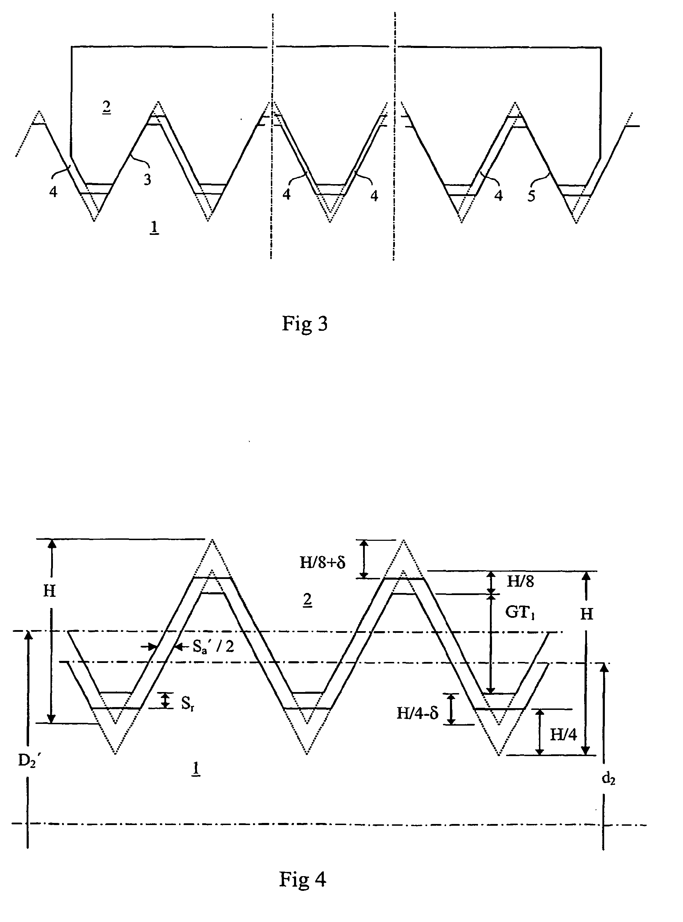

This problem is particularly noticeably at high prestressing forces, as is the case at hydraulic prestress of high-strength screw in dimension M18 and upwards, with thread tolerances according to standard, and nut greater height than standard. During the prestress, the nut is, in the end of the screw where the prestressing tool pulls, unloaded while the prestressing tool pulls the screw with an axial tensile force. High-strength screw is characterized by the force obtained at prestress near the yield point in tension being significantly greater than for ordinary screws, and that it thereby requires more threads to distribute the force among so that the stress per thread does not become too high, which results in a greater nut height than standard, e.g. of the order of 100 %. The axial extension of the screw that is obtained within the greater nut height has, however, still to be housed within the axial play of the nut in order to avoid interference. Thus, use of high-strength screw implies an increased risk of locking when thread tolerances according to standard do not give enough axial play. Thus, the size of the play sets a limit for how much the screw may be prestressed. In Fig. 3 is illustrated schematically how the threads of a prestressed screw co-operates with the threads of a screwed-on nut and the axial play which is required for locking not to occur.

The prevalent method to bring about an axial play is, according to the above, to give the screw a smaller mean diameter than the nut. It is, however, inappropriate, and occasionally even impossible, to additionally increase the difference in mean diameter between screw and nut so as to thereby obtain a sufficient axial play, since this decreases the thread coverage and implies higher surface pressure between the threads, as has been explained above.

The object of the invention is to overcome the above-mentioned disadvantages and find a solution to the problems mentioned above. This takes place by the method for the formation of the threads of a thread-provided element, such as a screw or a nut, which has the new features defined in the characterizing part of claim 1, as well as the method for the manufacture of threads of a thread-provided element intended to be included as one of two thread-provided parts in a bolted joint, which has the new features defined in claim 10.

Thus, the method for the formation of the threads, according to the invention, is characterized in that the threads of the thread-provided element are formed so that an additional play between said two thread-provided parts is obtained in the axial direction, at the same time as said initial play in radial direction remains substantially unaltered, the part of the bolted joint which consists of the thread-provided element no longer having ISO/Unified basic profile. In this way, the advantage is obtained that the thread coverage may be maintained and the largest feasible abutment between the two parts is obtained, which gives an opportunity to a maximum transfer of forces. This enables a high prestressing force of a screw, which is particularly advantageous for screws in high-strength material. However, the invention is not limited to the application for high-strength screw but may advantageously be used also in other applications.

According to an advantageous embodiment of the invention, the thread-provided element consists of the part having an internal thread the threads of which are formed so that said additional axial play together with the initial axial play equals at least the maximal elongation which the part having external thread is expected undergo, at the prestress, within the area where said parts co-operates.

According to another advantageous embodiment of the invention, the thread-provided element consists of the part having external thread and the threads of the part having external thread are formed so that said additional axial play together with the initial axial play corresponds to at least the maximal elongation which the part having external thread is expected undergo, at the prestress, within the area where said part having external thread co-operates with the part having internal thread.

According to an advantageous aspect, the width of the thread ridge of the thread-provided element is decreased by a measure corresponding to the desired additional axial play. This may be effected either by the decrease of the width of the thread ridge only occurs on one flank thereof, or is distributed on the two flanks thereof.

Furthermore, the present invention provides a thread-provided element formed according to the method of formation, as well as a bolted joint comprising at least one such thread-provided element.

The method in the manufacture of threads, according to the present invention, is characterized in that the threads are manufactured in two step, viz. a first step wherein the threads are manufactured by means of a cutting tool in the same way as in the manufacture of threads according to the ISO standard or Unified standard with the appurtenant initial axial and radial play, and a second step where the cutting tool only is advanced axially an additional distance in order to bring about an additional axial play decided beforehand, which distance corresponds to said additional play, as well as with an unaltered radial position. The advantages that are attained have already been described previously, but additional advantages are obtained by elements having the new thread of the invention that gives additional axial play simply may be manufactured starting from the manufacturing method applying to elements having usual standard threads, with the same equipment and with a very small changing in the control. The two steps may follow directly one after the other, non-stop. The invention also relates to a thread-provided element manufactured according to said method, as well as a bolted joint comprising at least one such thread-provided element.

The invention will now be disclosed in detail reference being made to the accompanying drawing figures, which illustrate prior art and the problems therewith, as well as show embodiment example of the present invention, and in which:
Fig. 1 shows the basic profile for threads according to the ISO standard and Unified standard,
Fig. 2 illustrates schematically how an extended axial play between screw and nut is achieved according to the ISO standard, in a part view from the side and in cross-section of a bolted joint,
Fig. 3 illustrates schematically how prestress of a screw affects the play between screw and nut in a bolted joint, seen in a part view from the side and in cross-section,
Fig. 4 shows a part view from the side and in cross-section of an embodiment example of a bolted joint having threads formed according to the present invention, and
Fig. 5 illustrates the manufacturing method according to the present invention.

As already has been mentioned in the introduction of the description, Fig. 1 shows the basic profile for threads, which is common to ISO/68 and Unified standard. The screw 1 is here the part that is under the basic profile line and the nut 2 is the part that is above the basic profile line in the figure. P is the thread pitch, H is the basic triangle height for screw and nut, respectively, d₂ is mean diameter for screw and D₂ is mean diameter for nut.

In Fig. 2 is shown schematically how a play between screw 1 (the lower part) and nut 2 (the upper part) according to the ISO standard and Unified standard is achieved according to prevalent practice, i.e. by displacement of the mean diameter d₂ of the screw in relation to the mean diameter D₂ of the nut, which also has been accounted for in the introduction of the description. Hereby, also the thread coverage decreases from having been GT₉ according to the basic profile to becoming GT₁. In radial direction, a play Sᵣ is obtained and in the axial direction a play Sₐ is obtained, which in the illustrated case is distributed on the two flanks of the thread so that the axial play at the respective flank is Sₐ/2.

In Fig. 3 is illustrated schematically how the threads of a prestressed screw 1 co-operate with the threads of a screwed-on nut 2 and the axial play that is required so that locking will not occur. To the left in the illustration is seen how, at one end of the nut, almost total abutment against the right flank 3 of the screw thread takes place, i.e. no play at said flank but all axial play 4 is located to the opposite flank, while at the other end of the nut, to the right in the illustration, abutment takes place against the left flank 5 of the screw thread. In the central portion of the nut, the axial play 4 is evenly distributed on both flanks.

In Fig. 4, an embodiment example is shown of formation of threads according to the present invention. An increased total axial play Sₐ', distributed with half on each of the respective flanks and which also can be described as the initial axial play Sₐ with addition of an additional axial play ΔSₐ, has been obtained in comparison with Fig. 2. This has been obtained by the fact that the mean diameter D₂ for the nut 2 has been moved out the distance α, i.e. the distance between mean diameter D₂' of the nut and the mean diameter d₂ of the screw 1 has increased. This has, however, been allowed to occur without the radial play Sᵣ being changed. Thus, the thread coverage has been maintained and is still equally large as the thread coverage in Fig. 2, i.e. GT₁. Had instead an increased axial play been provided according to the prevalent method, as is illustrated in Fig. 2, the thread coverage would have decreased in a way that corresponds to the one that is seen in Fig. 2, where GT₁ is smaller than GT_{g}. As also is seen in Fig. 4, the screw has maintained the basic profile thereof according to ISO/Unified standard while the modified nut, however, no longer complies with this basic profile.

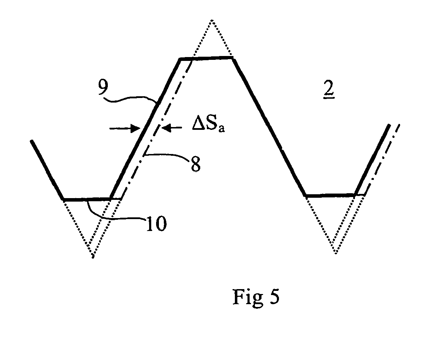

Finally, an embodiment example is shown in Fig. 5 of the method in the manufacture of threads of a thread-provided element intended to be included as one of two thread-provided parts in a bolted joint, according to the present invention. The bolted joint comprises a part having an internal thread in the form of a nut 2 and a part having an external thread in the form of a screw 1. As an example, a thread-provided element in the form of a nut 2 is shown in Fig. 5. The threads are manufactured in two steps, viz. a first step wherein the threads are manufactured by means of a cutting tool in the same way as in the manufacture of threads according to the ISO standard or Unified standard with the appurtenant initially axial and radial play, and a second step where the cutting tool only is advanced axially an additional distance so that the width of the thread ridge is decreased by a measure corresponding to the desired additional axial play ΔSₐ. This second step with axial feeding takes place with unaltered radial position. In Fig. 5 is illustrated how the decrease of the thread ridge takes place by one flank thereof being cut down. The position of the flank after the first step of machining is illustrated by the dashed line 8, and the position of the flank after the second step of machining is illustrated by the continuous line 9. Thus, all machining only occurs on one of the flanks of the thread ridge, but it is also feasible to machine both the flanks, if this is considered convenient. It is important to note that the radial position of the truncated top surface 10 is not effected by the machining in step two, the radial play remains thus unaltered and the thread coverage is maintained.

It should be added that in all illustrated cases, the bottoms of the threads are somewhat rounded, according to standard, but this has not been shown in the drawings for reasons of clarity.

In the shown examples, the nut has been illustrated as the part that has been formed with a thread that gives an additional play according to the present invention, but it may of course as well be the screw that is formed in this way, or alternatively both parts, if this is considered convenient.

The present invention should not be regarded as limited by the embodiments which have been disclosed, in terms of examples only, but may be modified and varied in a of multiple of ways, as is realized by a person skilled in the art, within the scope of the accompanying claims.

## Claims

1. Method in the formation of threads of a thread-provided element intended to be included as one of two thread-provided parts in a bolted joint, which bolted joint comprises a part (2) having an internal thread and a part (1) having an external thread, and wherein the part (1) having an external thread is intended to be prestressed with an axial tensile force, and where the threads of the respective parts initially are formed according to the ISO and/or Unified basic profile having an initial play in both the radial and axial direction, when said parts are screwed together and unstressed, **characterized in that** the threads of said thread-provided elements are formed so that an additional play (ΔSₐ) between said two thread-provided parts is obtained in the axial direction, at the same time as said initial play in radial direction remains substantially unaltered, the part of the bolted joint which consists of the thread-provided element no longer having ISO/Unified basic profile.

2. Method according to claim 1, **characterized in that** the thread-provided element consists of the part having internal thread, the threads of which are formed so that said additional axial play together with the initial axial play correspond to at least the maximal elongation which the part having external thread is expected to undergo, at the prestress, within the area where said parts co-operate.

3. Method according to claim 1, **characterized in that** the thread-provided element consists of the part having external thread, and that the threads of the part having external thread are formed so that said additional axial play together with the initial axial play correspond to at least the maximal elongation which the part having external thread is expected to undergo, at the prestress, within the area where said part having external thread co-operates with the part having internal thread.

4. Method according to any one of the preceding claims, **characterized in that** the axial play is increased with maintained thread coverage.

5. Method according to any one of the preceding claims, **characterized in that** the width of the thread ridge of the thread-provided element is decreased by a measure corresponding to the desired additional axial play.

6. Method according to claim 5, **characterized in that** the decrease of the width of the thread ridge only occurs on one flank thereof.

7. Method according to claim 5, **characterized in that** the decrease of the width of the thread ridge is distributed on both flanks thereof.

8. Thread-provided element formed according to the method defined in any one of claims 1-7.

9. Bolted joint comprising a part (2) having an internal thread and a part (1) having an external thread, which two thread-provided parts are tightened together with each other for forming the joint, **characterized in that** at least one of said thread-provided parts consists of a thread-provided element manufactured according to the method defined in any one of claims 1-7.

10. Method in the manufacture of threads of a thread-provided element intended to be included as one of two thread-provided parts in a bolted joint, which bolted joint comprises a part (2) having an internal thread and a part (1) having an external thread, **characterized in that** the threads are manufactured in two steps, viz. a first step wherein the threads are manufactured by means of a cutting tool in the same way as in the manufacture of threads according to the ISO standard or Unified standard with the appurtenant initial axial and radial play, and a second step where the cutting tool only is advanced axially an additional distance, and with unaltered radial position, for the achievement of an additional axial play (ΔSₐ) decided beforehand, said distance corresponding to said additional play.

11. Thread-provided element manufactured according to the method defined in claim 10.

12. Bolted joint comprising at least one thread-provided element manufactured according to the method defined in claim 10.

## Patentansprüche

1. Verfahren zur Ausbildung von Gewinden eines mit Gewinde versehenen Bauteils, das vorgesehen ist, als eines von zwei mit Gewinden versehenen Teilen in einer Schraubverbindung umfaßt zu sein, welche Schraubverbindung ein Teil (2) mit einem Innengewinde, und ein Teil (1) mit einem Außengewinde umfaßt, und wobei das Teil (1) mit einem Außengewinde dazu vorgesehen ist, mit einer Axialspannkraft vorgespannt zu werden, und wobei die Gewinde der jeweiligen Teile Anfangs gemäß dem ISO-Basisprofil und/oder vereinheitlichten Basisprofil mit einem anfänglichen Spiel in sowohl Radial- als auch Axialrichtung ausgebildet sind, wenn die Teile zusammengeschraubt werden und unbeansprucht sind, **dadurch gekennzeichnet, daß** die Gewinde der mit Gewinde versehenen Elemente so ausgebildet sind, daß ein zusätzliches Spiel (ΔSₐ) zwischen den beiden mit Gewinden versehenen Teilen in Axialrichtung erhalten wird, wobei gleichzeitig das anfängliche Spiel in Radialrichtung im wesentlichen unverändert bleibt, und wobei das Teil der Schraubverbindung, welches aus dem mit Gewinde versehenen Bauteil besteht, kein ISO-Basisprofil/Vereinheitlichtes Basisprofil mehr hat.

2. Verfahren nach Anspruch 1, **dadurch gekennzeichnet, daß** das mit Gewinde versehene Bauteil aus dem Teil mit Innengewinde besteht, dessen Gewinde derart ausgebildet sind, daß das zusätzliche axiale Spiel zusammen mit dem anfänglichen axialen Spiel wenigstens der maximalen Auslenkung entsprechen, welcher das Teil, das ein Außengewinde hat, bei der Vorspannung innerhalb des Bereichs unterliegen soll, wo die Teile zusammenwirken.

3. Verfahren nach Anspruch 1, **dadurch gekennzeichnet, daß** das mit Gewinde versehene Bauteil aus dem Teil mit Außengewinde besteht und daß die Gewinde des Teils mit Außengewinde derart ausgebildet sind, daß das zusätzliche axiale Spiel zusammen mit dem anfänglichen axialen Spiel wenigstens der maximalen Auslenkung entspricht, welcher das Teil mit Außengewinde bei der Vorspannung innerhalb des Bereichs unterliegen soll, wo das Teil mit Außengewinde mit dem Teil mit Innengewinde zusammenwirkt.

4. Verfahren nach einem der vorhergehenden Ansprüche, **dadurch gekennzeichnet, daß** das axiale Spiel bei Aufrechterhalten der Gewindeüberdeckung vergrößert wird.

5. Verfahren nach einem der vorhergehenden Ansprüche, **dadurch gekennzeichnet, daß** die Breite des Gewindegangs des mit Gewinde versehenen Bauteils um ein Maß vermindert ist, das dem gewünschten zusätzlichen axialen Spiel entspricht.

6. Verfahren nach Anspruch 5, **dadurch gekennzeichnet, daß** die Abnahme der Breite des Gewindegangs nur an einer Flanke davon auftritt.

7. Verfahren nach Anspruch 5, **dadurch gekennzeichnet, daß** die Abnahme der Breite des Gewindegangs an beiden Flanken davon verteilt ist.

8. Mit Gewinde versehenes Bauteil, das ausgebildet ist nach einem Verfahren wie definiert in einem der Ansprüche 1 bis 7.

9. Schraubverbindung, umfassend ein Teil (2) mit einem Innengewinde und ein Teil (1) mit einem Außengewinde, welche beiden mit Gewinde versehenen Teile zur Ausbildung einer Verbindung miteinander befestigt sind, **dadurch gekennzeichnet, daß** wenigstens eines der mit Gewinde versehenen Teile aus einem mit Gewinde versehenen Bauteil besteht, das gemäß dem in einem der Ansprüche 1 bis 7 definierten Verfahren hergestellt ist.

10. Verfahren bei der Herstellung von Gewinden eines mit Gewinde versehenen Bauteils, das dazu vorgesehen ist, um als eines von zwei mit Gewinde versehenen Teilen in einer Schraubverbindung umfaßt zu sein, welche Schraubverbindung ein Teil (2) mit einem Innengewinde und ein Teil (1) mit einem Außengewinde umfaßt, **dadurch gekennzeichnet, daß** die Gewinde in zwei Schritten hergestellt sind, nämlich einem ersten Schritt, in welchem die Gewinde mit einem Schneidwerkzeug in derselben Weise wie bei der Herstellung von Gewinden nach ISO-Standard oder vereinheitlichtem Standard hergestellt werden mit dem zugehörigen anfänglichen axialen und radialen Spiel, und einem zweiten Schritt, in welchem das Schneidwerkzeug nur axial um eine zusätzliche Strecke vorgeschoben wird bei unveränderter radialer Position zur Erzielung eines zusätzlichen axialen Spiels (ΔSₐ), das vorher festgelegt wurde, wobei die Strecke dem zusätzlichen Spiel entspricht.

11. Mit Gewinde versehenes Element, das hergestellt ist nach dem in Anspruch 10 definierten Verfahren.

12. Schraubverbindung, umfassend wenigstens ein mit Gewinde versehenes Bauteil, das hergestellt ist nach einem Verfahren wie in Anspruch 10 definiert.

## Revendications

1. Procédé de formation de filets d'un élément pourvu de filets destiné à être compris comme l'une des deux pièces pourvues de filets dans un assemblage boulonné, lequel assemblage boulonné comprend une pièce (2) présentant un filet interne et une pièce (1) présentant un filet externe, et dans lequel la pièce (1) présentant un filet externe est destinée à être précontrainte avec une force de traction axiale, et dans lequel les filets des pièces respectives sont initialement formées selon le profil ISO et/ou le profil de base Unifié présentant un jeu initial dans les sens radial et axial, lorsque lesdites pièces sont vissées ensemble et non sollicitées, **caractérisé en ce que** les filets desdits éléments pourvus de filets sont formés de sorte qu'un jeu supplémentaire (ΔSₐ) entre lesdites deux pièces pourvues de filets est obtenu dans le sens axial, au même moment où ledit jeu initial dans le sens radial reste sensiblement inchangé, la pièce de l'assemblage boulonné qui est composée de l'élément pourvu de filets ne présentant plus un profil de base ISO/Unifié.

2. Procédé selon la revendication 1, **caractérisé en ce que** l'élément pourvu de filets est composé de la pièce présentant un filet interne, dont les filets sont formés de sorte que ledit jeu axial supplémentaire ainsi que le jeu axial initial correspondent à au moins l'allongement maximum que la pièce présentant un filet externe doit subir, lors de la précontrainte, dans la zone où les pièces agissent conjointement.

3. Procédé selon la revendication 1, **caractérisé en ce que** l'élément pourvu de filets est composé de la pièce présentant un filet externe, et **en ce que** les filets de la pièce présentant le filet externe sont formés de sorte que ledit jeu axial supplémentaire ainsi que le jeu axial initial correspondent à au moins l'allongement maximum que la pièce présentant le filet externe doit subir, lors de la précontrainte, dans la zone où ladite pièce présentant le filet externe agit conjointement avec la pièce présentant le filet interne.

4. Procédé selon l'une quelconque des revendications précédentes, **caractérisé en ce que** le jeu axial est augmenté avec une couverture de filet maintenue.

5. Procédé selon l'une quelconque des revendications précédentes, **caractérisé en ce que** la largeur de la crête de filet de l'élément pourvu de filets est réduite d'une mesure correspondant au jeu axial supplémentaire souhaité.

6. Procédé selon la revendication 5, **caractérisé en ce que** la diminution de la largeur de la crête de filet ne survient que sur un flanc de celle-ci.

7. Procédé selon la revendication 5, **caractérisé en ce que** la diminution de la largeur de la crête de filet est répartie sur ses deux flancs.

8. Élément pourvu de filets formé selon le procédé défini dans l'une quelconque des revendications 1 à 7.

9. Assemblage boulonné comprenant une pièce (2) présentant un filet interne et une pièce (1) présentant un filet externe, lesquelles deux pièces pourvues de filets sont serrées l'une avec l'autre pour former l'assemblage, **caractérisé en ce qu'**au moins une desdites pièces pourvues de filets est composée d'un élément pourvu de filets fabriqué selon le procédé défini dans l'une quelconque des revendications 1 à 7.

10. Procédé de fabrication de filets d'un élément pourvu de filets destiné à être compris comme l'une des deux pièces pourvues de filets dans un assemblage boulonné, lequel assemblage boulonné comprend une pièce (2) présentant un filet interne et une pièce (1) présentant un filet externe, **caractérisé en ce que** les filets sont fabriqués en deux étapes, à savoir une première étape dans laquelle les filets sont fabriqués au moyen d'un outil de découpage de la même manière que lors de la fabrication de filets selon la norme ISO ou la norme Unifiée avec les jeu initiaux axial et radial correspondants, et une seconde étape dans laquelle l'outil de découpage est uniquement avancé axialement sur une distance supplémentaire, et avec une position radiale inchangée, pour l'obtention d'un jeu axial supplémentaire (ΔSₐ) décidé par avance, ladite distance correspondant au dit jeu supplémentaire.

11. Élément pourvu de filets fabriqué selon le procédé défini dans la revendication 10.

12. Assemblage boulonné comprenant au moins un élément pourvu de filets fabriqué selon le procédé défini dans la revendication 10.
